# EUROPÄISCHE PATENTANMELDUNG

(11) **EP 1 063 389 A2**
(43) Veröffentlichungstag der Anmeldung: **27.12.2000**
(21) Anmeldenummer: 00112358.7
(22) Anmeldetag: 09.06.2000
(51) Int. Cl.: F01D 5/28, F01D 5/18, F01D 25/14

(54) **Turbinenschaufel**

(30) Priorität: 24.06.1999 DE 19928871
(71) Anmelder: ABB Research Ltd., 8050 Zürich (CH)
(72) Erfinder: Bossmann, Hans-Peter, Dr., 69168 Wiesloch (DE); Bernhardi, Otto-Ernst, Dr., 76669 Bad Schönborn (DE); Schmutzler, Hans-Johachim, Dr., 67487 Maikammer (DE); Reiss, Harald, Prof. Dr., 69118 Heidelberg (DE); Milanovic, Raiko, 69121 Heidelberg (DE); Weiler, Ludwig, Dr., 69124 Heidelberg (DE); Sommer, Christoph, Dr., 68723 Plankstadt (DE); Sommer, Marianne, Dr., 69207 Sandhausen (DE)
(74) Vertreter: Miller, Toivo

(57) **Zusammenfassung**

Turbinenschaufeln (1) werden gegen die von den Verbrennungsgasen hervorgerufenen hohen Temperaturen üblicherweise mit einer Wärmedämmung (2) geschützt. Die bis jetzt bekannten Wärmedämmungen (2) bieten jedoch keinen optimalen Schutz für das Material von Turbinenschaufeln. Um diesen Schutz zu verbessern, ist die erfindungsgemäße Turbinenschaufel (1) einer strukturierten Wärmeisolation (2) versehen. De Struktur (3) wird durch einen Filz oder einen aufgeschäumten Werkstoff gebildet wird, der mit einem Wärmedämmstoff (5) ausgefüllt werden kann.

## Beschreibung

Die Erfindung bezieht sich auf eine Turbinenschaufel gemäß dem Oberbegriff des Patentanspruchs 1.

Turbinenschaufeln werden zum Antrieb von Gasturbinen direkt mit heißen Verbrennungsgasen beaufschlagt. Sie sind dabei sowohl thermischen als auch mechanischen Beanspruchungen während des Betriebs der Gastrubine sowie Belastungszyklen ausgesetzt. Turbinenschaufeln werden bevorzugt aus einer Ni-Superlegierung gefertigt. Die Kühlung einer solchen Turbinenschaufel wird durch die Wärmeleitfähigkeit des Schaufelmaterials und den Wärmeübergang zur Kühlluft begrenzt. Die Turbinenschaufeln werden deshalb gegen die von den Verbrennungsgasen verursachten hohen Temperaturen mittels Wärmedämmschichten und/oder mit Hilfe von Kühlungseinrichtungen geschützt.

Die bis jetzt bekannten Wärmedämmschichten bestehen aus einem Verbund. Dieser umfaßt eine haftvermittelnde Metallschicht, welche direkt auf die Begrenzungsflächen der Turbinenschaufeln aufgebracht ist. Auf diese haftvermittelnde Metallschicht ist eine äußere Schicht aus einem keramischen Material aufgetragen. Die metallische Schicht wird allgemein als Bondcoat bezeichnet, während die keramische Schicht in der Literatur auch thermal barrier coating heißt. Die verschiedenen Wärmedämmschichten, die bis jetzt bei Turbinenschaufeln eine Anwendung finden, unterscheiden sich im wesentlichen nur in der Zusammensetzung der haftvermittelnden Schicht und den Verfahren, mit denen die beiden Schichten aufgetragen werden. Die keramische Schicht wird häufig aus einem Zirkonoxid gefertigt, das mittels Yttriumoxid teilstabilisiert ist. Dieser Werkstoff weist eine ausgesprochen niedrige Wärmeleitfähigkeit auf.

Die keramische Schicht hat im Bereich des Schaufelblatts eine Dicke bis 500µm, während sie im Bereich der Plattform 1 mm beträgt.

Diese Wärmedämmungen weisen den Nachteil auf, daß sich bei hohen Temperaturen auf der haftvermittelnden Schicht eine Oxidschicht ausbilden, da die Bestandteile der Wärmedämmschicht herstellungs- und materialbedingt hinsichtlich der Diffusion von Sauerstoff nicht dicht sind. Diese natürlich wachsende Oxidschicht trennt in zunehmenden Maße die Oberfläche der haftvermittelnden Schicht von der keramischen Schicht. Mit zunehmender Dicke dieser Oxidschicht verliert die keramische Schicht an Haftfestigkeit und beginnt abzuplatzen. Das Dickenwachstum der Oxidschicht nimmt mit steigender Temperatur des Metalls der Turbinenschaufel exponentiell zu, während die Lebensdauer der keramischen Schicht in gleicher Weise abnimmt. Je dicker die keramische Schicht ist, um so leichter platzt sie ab. Dieses Verhalten wird durch die thermomechanische Belastung der Wärmedämmschicht während des Betriebs der Gasturbine verursacht. Damit ist die Verwendung solcher Wärmedämmschichten bei Turbinenschaufeln begrenzt.

Der Erfindung liegt die Aufgabe zugrunde, eine Turbinenschaufel aufzuzeigen, die mit einem Schutz vorgesehen ist, mit dem die Einwirkungen sehr hoher Temperaturen auf das Material der Turbinenschaufeln wesentlich reduziert werden kann.

Diese Aufgabe wird durch die Merkmale des Patentanspruchs 1 gelöst.

Erfindungsgemäß wird auf die Begrenzungsflächen einer Turbinenschaufel eine Wärmeisolation aufgebracht. Sie ist in der Lage, eine Ni-Basislegierung, aus der die Turbinenschaufeln vorwiegend gefertigt sind, vor den zerstörenden Einwirkungen der hohen Temperaturen zu schützen. Die Wärmeisolation wird durch eine feste Struktur begrenzt, in die ein Wärmedämmstoff eingebettet werden kann. Diese Struktur wird durch einen porösen, aufgeschäumten Werkstoff oder einen porösen Filz gebildet. Der Filz kann aus kurzen und/oder langen Fasern gefertigt sein, die aus einem oxidischen oder nichtoxidischen Werkstoff oder einer oxidischen oder nichtoxidischen Keramik - bestehen. Bei der Ausbildung des aufgeschäumten Werkstoffs wird ebenfalls von einem dieser Materialen ausgegangen. Für die Herstellung der Fasern wird vorzugsweise ein metallisches, gegenüber hohen Temperaturen beständiges Material verwendet. Die Fasern werden beispielsweise durch Verdüsung der Schmelze eines metallischen Materials herstellt. Ihr Durchmesser beträgt 10 µm bis 500 µm vorzugsweise 10 bis 100 µm. Die Dichte des Filzes wird so eingestellt, daß sie nur etwa 5 bis 30% des Fasermaterials beträgt, so daß das Porenvolumen des Filzes 70 bis 95% beträgt. Der so ausgebildete Filz wird dann dauerhaft mit den Begrenzungsflächen einer Turbinenschaufel verbunden. Der Filz kann beispielsweise auf die Begrenzungsflächen der Turbinenschaufel gelötet werden. Andererseits läßt sich der Filz auch mittels Laserschweißen auf den Begrenzungsflächen befestigen. Der Filz kann zunächst auch dauerhaft auf einen Metall- oder Keramikträger aufgebracht werden, der anschließend ebenfalls dauerhaft mit den Begrenzungsflächen der Turbinenschaufel verbunden wird. Ebenso ist es möglich, die Wärmeisolation beim Gießen der Turbinenschaufel als Bestandteil der Wand oder als Wandoberfläche der Gießform zu nutzen, wodurch eine unmittelbare Verbindung mit dem Material der Turbinenschaufel erreicht wird. Ebenso kann auf die Begrenzungsflächen der Turbinenschaufel zunächst eine metallische Zwischenschicht aus einem hochtemperaturbeständigen Ni-Basis-Lotwerkstoff aufgetragen werden, in welche der Filz anschließend eingelötet wird. Andere Verfahren, die ebenfalls eine dauerhafte Verbindung zwischen dem Filz und den Begrenzungsflächen sicherstellen, können auch genutzt werden. Der Filz wird nach der Befestigung auf den Begrenzungsflächen teilweise oder vollständig mit einem Wärmedämmstoff in Form eines metallischen oder nichtmetallischen Oxids, eines Silicids, eines salzartigen Carbids, eines Salzes in Form eines Sulfats, eines Silikats, eines Phosphats bzw. mit einem Wärmedämmstoff, der aus einem Gemisch aus zwei oder mehreren dieser chemischen Verbindungen besteht, gefüllt. Es ist auch möglich, den Filz mit einem keramischen Material in Form von Zirkoniumdioxid zu füllen. Wird die Struktur der Wärmeisolation durch einen aufgeschäumten Werkstoff gebildet, so können für das Ausfüllen dieser Struktur die gleichen Werkstoffe verwendet werden.

Das Füllen des Filzes erfolgt durch Einschlickern oder durch Abscheiden des Wärmedämmstoffs aus der Gasphase oder durch thermisches Spritzen in Form von Plasmaspritzen oder Flammspritzen. Durch den Filz erhält die Wärmeisolation eine feste Verankerung und eine hohe mechanische Stabilität auf den Begrenzungsflächen der Turbinenschaufeln. Durch das Ausfüllen des Filzes wird der Wärmetransport durch Wärmestrahlung zu den Begrenzungsflächen der Turbinenschaufel um so mehr unterbunden, je höher die Strahlungsextinktion des Füllmaterials ist. Der Wärmetransport über die Fasern ist zu vernachlässigen. Durch das Verfüllen des Filzes kann dessen Porosität und damit die Wärmeleitung gezielt eingestellt werden. Die Dicke der Wärmeisolation kann wesentlich größer ausgebildet werden als bei bekannten Wärmedämmungen, da der Filz und dessen Verankerung der Wärmeisolation zusätzliche mechanische Stabilität verleiht. Durch den Filz wird der Wärmedämmstoff vor einem Abrieb durch feste Teilchen geschützt, die von den Gasen mitgeführt werden. Bei der Verwendung von Zirkoniumdioxid als Wärmedämmstoff wird die Haftfestigkeit der Wärmeisolation auf den Begrenzungsflächen der Turbinenschaufeln aufgrund der guten Verankerung des Filzes beim Versintern oder der Phasentransformation nicht beeinträchtigt.

Sind die Temperaturen, denen eine Turbinenschaufel ausgesetzt wird, niedriger als die in Gasturbinen im allgemein üblichen Betriebstemperaturen, so reicht es aus, wenn die Turbinenschaufel auf ihren Begrenzungsflächen nur mit einem Filz oder einem aufgeschäumten Werkstoff versehen wird. Das Ausfüllen des Filzes bzw. des aufgeschäumten Werkstoffs mit einem Wärmedämmstoff ist in diesem Fall nicht erforderlich, da die Struktur alleine eine ausreichend Wärmeisolation bietet.

Weitere erfinderische Merkmale sind in den abhängigen Ansprüchen gekennzeichnet.

Die Erfindung wird nachfolgend an Hand einer schematischen Zeichnung näher erläutert.

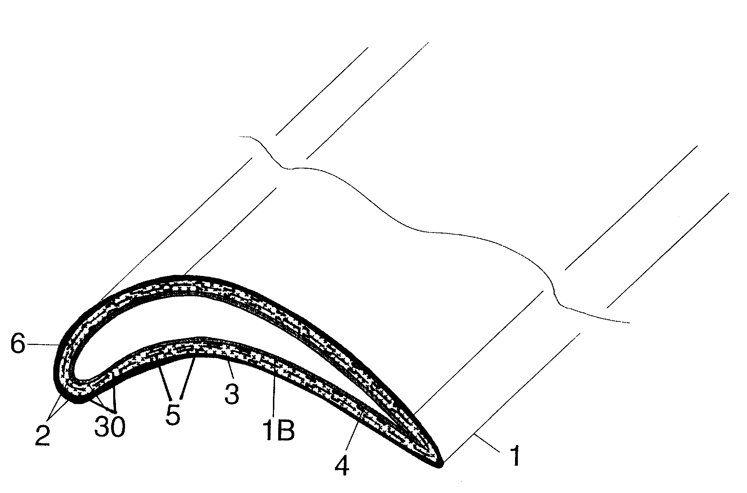

Die einzige zur Beschreibung gehörige Figur zeigt eine Turbinenschaufel 1 mit einer Wärmeisolation 2. Die Struktur 3 der Wärmeisolation 2 wird bei dem hier dargestellten Ausführungsbeispiel durch einen Filz gebildet. Dieser ist bei dem hier dargestellten Ausführungsbeispiel aus kurzen Fasern 30 gefertigt, die aus einem metallischen Werkstoff hergestellt sind, der gegenüber hohen Temperaturen beständig ist. Die Fasern können jedoch auch aus einem Metalloxid oder einer oxidischen oder nichtoxidischen Keramik hergestellt werden. Die Fasern 30 werden bei dem hier dargestellten Ausführungsbeispiel durch Verdüsen des metallischen Materials aus einer Schmelze herstellt. Ihr Durchmesser beträgt 10 µm bis 500 µm, vorzugsweise 10 bis 100 µm. Der Filz 3 wird so herstellt, daß seine Dichte nur etwa 5-30% des Fasermaterials beträgt, so daß sein Porenvolumen 70-95% beträgt. Der so ausgebildete Filz 3 wird dann dauerhaft mit den Begrenzungsflächen 1B der Turbinenschaufel 1 verbunden. Der Filz 1 kann beispielsweise auf die Begrenzungsflächen 1B der Turbinenschaufel 1 gelötet werden. Andererseits läßt sich der Filz 3 auch mittels Laserschweißen auf den Begrenzungsflächen 1B befestigen. Der Filz 3 kann zunächst auch dauerhaft auf einen Metall- oder Keramikträger (hier nicht dargestellt) aufgebracht werden, der anschließend ebenfalls dauerhaft mit den Begrenzungsflächen 1B der Turbinenschaufel 1 verbunden wird. Ebenso ist es möglich, den Filz 3 beim Gießen (hier nicht dargestellt) der Turbinenschaufel 1 als Wand der Gießform zu nutzen, wodurch eine unmittelbare Verbindung mit dem Material der Turbinenschaufel 1 erreicht wird. Bei Bedarf kann, wie in der Figur gezeigt, auf die Begrenzungsflächen 1B der Turbinenschaufel 1 zunächst eine metallische Zwischenschicht 4 aufgetragen werden. Diese ist bei dem hier dargestellten Ausführungsbeispiel aus einem hochtemperaturbeständigen Ni-Basis-Lot hergestellt. In diese Zwischenschicht 4 wird der Filz 3 anschließend eingelötet. Andere Verfahren, die ebenfalls eine dauerhafte Verbindung zwischen dem Filz 3 und den Begrenzungsflächen 1B sicherstellen, können auch genutzt werden. Der Filz 3 wird nach der Befestigung auf den Begrenzungsflächen 1B teilweise oder vollständig mit einem Wärmedämmstoff 5 in Form eines metallischen oder nichtmetallischen Oxids, eines Silicids, eines salzartigen Carbids, eines Salzes in Form eines Sulfats, eines Silikats, eines Phosphats gefüllt. Als Wärmedämmstoff 5 kann auch ein Gemisch aus zwei oder mehreren dieser chemischen Verbindungen verwendet werden. Es ist auch möglich, den Filz 3 mit einem keramischen Material in Form von Zirkoniumdioxid zu füllen. Das Füllen des Filzes 3 erfolgt durch Einschlickern oder durch Abscheiden des Wärmedämmstoffs 5 aus der Gasphase oder durch thermisches Spritzen beispielsweise in Form von Flammspritzen oder Plasmaspritzen. Durch den Filz 3 erhält die Wärmeisolation 2 eine feste Verankerung und eine hohe mechanische Stabilität auf den Begrenzungsflächen 1B der Turbinenschaufel 1. Beim Verfüllen des Filzes 3 mit dem Wärmedämmstoff 5 kann dessen Porosität und damit die Wärmeleitung gezielt eingestellt werden. Die Dicke der Wärmeisolation 2 beträgt bei dem hier dargestellten Ausführungsbeispiel 1mm. Durch den Filz 3 wird der Wärmedämmstoff 5 vor einem Abrieb durch feste Teilchen (hier nicht dargestellt) geschützt, die von den Gasen mitgeführt werden. Bei der Verwendung von Zirkoniumdioxid als Wärmedämmstoff 5 wird die Haftfestigkeit der Wärmeisolation 2 auf den Begrenzungsflächen 1B der Turbinenschaufeln 1 aufgrund der guten Verankerung des Filzes 3 beim Versintern oder der Phasentransformation nicht beeinträchtigt. Bei Bedarf kann die Wärmeisolation 2 mit einer Deckschicht 6 beispielsweise aus Zirkonoxid überzogen werden. Sie hat die Aufgabe bei Bedarf die tragende metallische Filzstruktur vor Korrosion zu schützen.

Die Struktur 3 der Wärmeisolation kann auch durch einen aufgeschäumten Werkstoff (hier nicht dargestellt) gebildet werden. Für seine Herstellung wird vorzugsweise eines der Materialen verwendet, das auch für die Fertigung des Filzes vorgesehen ist. Als Wärmedämmstoff kommt auch hierbei eines der oben beschriebenen Werkstoffe zur Anwendung.

Die Struktur 3 der Wärmeisolation, ob als Filz oder aufgeschäumter Werkstoff ausgebildet, kann bei Bedarf vorgefertigt und anschließend mit einem metallischen oder keramischen Träger (hier nicht dargestellt) verbunden werden. Dieser kann dann zu einem späteren Zeitpunkt dauerhaft auf den Begrenzungsflächen 1B oder der Zwischenschicht 4 befestigt werden.

Sind die Temperaturen, denen eine Turbinenschaufel ausgesetzt wird, niedriger als die in Gasturbinen im allgemein üblichen Betriebstemperaturen, so reicht es aus, wenn die Turbinenschaufel auf ihren Begrenzungsflächen nur mit einem Filz oder einem aufgeschäumten Werkstoff versehen wird. Das Ausfüllen der durch den Filz oder den aufgeschäumten Werkstoff gebildeten Struktur mit einem Wärmedämmstoff ist in diesem Fall nicht erforderlich, da die Struktur alleine eine ausreichend Wärmeisolation bietet. Für die Fertigung des Filzes oder des aufgeschäumten Werkstoffs werden auch in diesem Fall die oben angegebenen Materialen verwendet.

## Patentansprüche

1. Turbinenschaufel mit einer Wärmedämmung (2), dadurch gekennzeichnet, daß die Wärmedämmung (2) als strukturierte Wärmeisolation (2) ausgebildet ist, die mindestens bereichsweise mit wenigstens einem Wärmedämmstoff (5) ausgefüllt ist.

2. Turbinenschaufel nach Anspruch 1, dadurch gekennzeichnet, daß die Struktur (3) der Wärmeisolation (2) aus einem Filz (3) oder einem aufgeschäumten Werkstoff besteht.

3. Turbinenschaufel nach einem der Ansprüche 1 oder 2 dadurch gekennzeichnet, daß der Filz (3) aus kurzen und/oder langen Fasern (30) gefertigt ist, die aus einem metallischen Oxid, einem nichtoxidischen Werkstoff oder einer oxidischen oder nichtoxidischen Keramik hergestellt sind, daß der Durchmesser der Fasern (30) zwischen 10 µm bis 500 µm beträgt, und daß die Dichte des Filzes 5 bis 30% des Fasermaterials und das Porenvolumen des Filzes 70 bis 95% beträgt.

4. Turbinenschaufel nach Anspruch 1, dadurch gekennzeichnet, daß der aufgeschäumte Werkstoff (3) aus einem metallischen Oxid oder einem nichtoxidischen Werkstoff oder einer oxidischen oder nichtoxidischen Keramik hergestellt ist.

5. Turbinenschaufel nach einem der Ansprüche 1 bis 4, dadurch gekennzeichnet, daß der Wärmedämmstoff (5) aus einem metallischen oder nichtmetallischen Oxid, einem Silicid, einem salzartigen Carbid, einem Salz in Form eines Sulfats, eines Silikats, eines Phosphats oder einem Gemisch aus zwei oder mehreren dieser chemischer Verbindungen gefertigt ist.

6. Turbinenschaufel nach einem der Ansprüche 1 bis 5, dadurch gekennzeichnet, daß der Wärmedämmstoff (5) aus einem keramischen Material in Form von Zirkoniumdioxid gefertigt ist.

7. Turbinenschaufel nach einem der Ansprüche 1 bis 6, dadurch gekennzeichnet, daß die Struktur (3) in die Begrenzungsflächen (1B) eingelötet oder damit verschweißt ist.

8. Turbinenschaufel nach einem der Ansprüche 1 bis 6, dadurch gekennzeichnet, daß die Struktur (3) in eine auf die Begrenzungsflächen (1B) aufgebrachte Zwischenschicht (4) eingelötet ist.

9. Turbinenschaufel nach einem der Ansprüche 1 bis 6, dadurch gekennzeichnet, daß die Struktur (3) der Wärmeisolation (2) vorgefertigt und mit einem metallischen oder keramischen Träger verbunden ist, der dauerhaft auf den Begrenzungsflächen (1B) befestigbar ist.

10. Turbinenschaufel mit einer Wärmedämmung (2), dadurch gekennzeichnet, daß die Wärmedämmung (2) nur aus einer strukturierten Wärmeisolation (2) besteht, deren Struktur (3) aus einem Filz oder einem aufgeschäumten Werkstoff gefertigt ist.

11. Turbinenschaufel nach Anspruch 10, dadurch gekennzeichnet, daß der Filz (3) aus kurzen und/oder langen Fasern (30) gefertigt ist, die aus einem metallischen Oxid, einem nichtoxidischen Werkstoff oder einer oxidischen oder nichtoxidischen Keramik hergestellt sind, daß der Durchmesser der Fasern (30) zwischen 10 µm bis 500 µm beträgt, und daß die Dichte des Filzes 5 bis 30% des Fasermaterials und das Porenvolumen des Filzes 70 bis 95% beträgt.

12. Turbinenschaufel nach Anspruch 10, dadurch gekennzeichnet, daß der aufgeschäumte Werkstoff (3) aus einem metallischen Oxid oder einem nichtoxidischen Werkstoff oder einer oxidischen oder nichtoxidischen Keramik hergestellt ist.

13. Turbinenschaufel nach einem der Ansprüche 1 bis 12 , dadurch gekennzeichnet, daß die Struktur (3) mit einem Überzug (6) versehen ist.
